# EUROPÄISCHE PATENTSCHRIFT

(11) **EP 1 757 392 B1**
(45) Veröffentlichungstag und Bekanntmachung des Hinweises auf die Patenterteilung: **07.05.2008**
(21) Anmeldenummer: 05018464.7
(22) Anmeldetag: 25.08.2005
(51) Int. Cl.: B23B 31/32, B23B 31/16, B23B 31/14

(54) **Membranspannfutter**
Diaphragm chuck
Mandrin à diaphragme

(43) Veröffentlichungstag der Anmeldung: 28.02.2007
(73) Patentinhaber: SMW-AUTOBLOK Spannsysteme GmbH, 88074 Meckenbeuren (DE)
(72) Erfinder: Rehm, Fritz, 88094 Oberteuringen (DE); Mojicevic, Zoran, 88046 Friedrichshafen (DE)
(74) Vertreter: Engelhardt, Guido

(56) Entgegenhaltungen:
- DE-A1- 19 919 408
- US-A- 2 719 721
- US-A- 2 993 473
- US-A- 3 087 737

## Beschreibung

Die Erfindung bezieht sich auf ein Membranspannfutter mit in einem Futterkörper eingesetzten auf ein einzuspannendes Werkstück einwirkenden Spannbacken, die mit einer an der Stirnfläche des Futterkörpers in dessen äußeren Bereich befestigten und durch ein zentrisch angeordnetes axial verschiebbares Betätigungsglied verformbaren Membran trieblich verbunden sind, wobei in Ausnehmungen des Futterkörpers den Spannbacken zugeordnete Gegengewichte eingesetzt und die als Spannköpfe gestalteten Spannbacken jeweils mit einem abgesetzten, in Richtung des Futterkörpers axial gerichten und etwa achsparallel zu diesem verlaufenden Ansatzstück versehen sind, die in in den Gegengewichten eingearbeiteten Freisparungen gehalten und die Spannbacken mittels in die Ansatzstücke eingreifender und in deren Achsrichtung wirkender Schnellspanneinrichtungen mit der Membran sowie den Gegengewichten verspannbar sind.

Ein Membranspannfutter dieser Art ist durch die DE 199 19 408 B4 bekannt und hat sich in der Praxis gut bewährt. Die Ansatzstücke der Spannbacken sind hierbei jeweils in einem Backenträger eingesetzt und geführt, der mit der Membran trieblich verbunden ist und demnach deren Verstellbewegungen folgt. Da die Spannbacken eines Spannfutters jeweils in Spannstellung eingeschliffen werden, können die Spannbacken, sofern die vorgegebene Präzision erhalten werden soll, nur jeweils auf diesem Futter verwendet werden. Ein Austausch mit Spannbacken anderer Futter ist demnach, wenn überhaupt, nur bedingt möglich. Auch können Spannbacken nicht ohne weiteres nachgeliefert werden; diese sind vielmehr auf dem Spannfutter, auf dem sie verwendet werden sollen, wiederum einzuschleifen. Dies bedingt bei Änderung eines Bearbeitungsvorganges, da in diesem Fall die Spannbacken auszuschleifen sind, einen erheblichen Zeit- und Arbeitsaufwand. Auch sind die Investitionskosten für die Lagerhaltung einer großen Anzahl von Spannbacken hoch.

Aufgabe der Erfindung ist es daher, das Membranspannfutter der vorgenannten Art in der Weise auszugestalten, dass die Spannbacken nicht in Spannstellung des Spannfutters ausgeschliffen werden müssen, sondern separat hergestellt und maßgenau bearbeitet werden können. Somit soll erreicht werden, dass die Spannbacken nicht abhängig sind von einem zugeordneten Spannfutter, sondern dass diese unter Spannfuttern leicht ausgetauscht bzw. nachgeliefert werden können, so dass die Rüstzeiten erheblich zu vermindern sind und eine kostengünstige Bearbeitung von Werkstücken ermöglicht wird.

Gemäß der Erfindung wird dies bei einem Membranspannfutter der eingangs genannten Gattung dadurch erreicht, dass die Ansatzstücke der Spannbacken bzw. der Spannköpfe mit radialem Spiel in der Membran und den Gegengewichten angeordnet sind und dass die Spannbacken bzw. die Spannköpfe unmittelbar an einer ersten in Spannstellung achsparallel zu dem Futterkörper verlaufenden Referenzfläche und einer zweiten achssenkrecht zu dieser an der Membran angearbeiteten Referenzfläche abgestützt sind.

Zweckmäßig ist es hierbei, um eine präzise Anlage der Spannbacken an der ersten Referenzfläche der Membran sicherzustellen, dass die Spannbacken bzw. die Spannköpfe mittels einer oder mehrerer axial gerichteter in der Membran und/oder den Spannbacken bzw. die Spannköpfe eingesetzter Federrasten an der ersten Referenzfläche der Membran anzulegen und mittels der Schnellspanneinrichtung an dieser zu fixieren sind.

Dies kann auf einfache Weise dadurch bewerkstelligt werden, in dem die Federrasten jeweils aus einem achsparallel zu der ersten Referenzfläche der Membran angeordneten in einer Bohrung der Membran oder der Spannbacken bzw. der Spannköpfe eingesetzten Raststift, der entgegen der Kraft einer Feder axial verschiebbar ist, und einer diesem zugeordneten in die der zweiten Referenzfläche der Membran gegenüberliegenden Gegenfläche oder in die zweite Referenzfläche eingearbeitete Ausnehmung mit einer kegelig ausgebildeten Spitze eingreift.

Angebracht ist es ferner, um eine formschlüssige Verbindung zu bewerkstelligen, die Gegengewichte mit den Spannbacken bzw. den Spannköpfen fest zu verbinden, vorzugsweise zu verschrauben, und jeweils mittels eines zentrisch zu den Ansatzstücken der Spannbacken angeformten Bundes in zugeordnete in der Membran eingearbeitete Ausnehmungen zu zentrieren.

Um die Spannbacken bzw. die Spannköpfe in Umfangsrichtung leicht positionieren zu können, sollten diese jeweils mit einem nach außen abstehenden und in einen axial gerichteten in die Membran eingearbeiteten Schlitz eingreifenden Stift versehen sein.

Auch können die Spannbacken bzw. die Spannköpfe mit auswechselbar an diesen befestigten Einsatzbacken ausgestattet werden, es ist aber selbstverständlich auch möglich, die Spannbacken einstückig auszubilden.

Bei allen Spannbackenausgestaltungen sollten die Spannflächen der Spannbacken bzw. an den Spannköpfen vorgesehene Anlageflächen für Einsatzbacken und deren Spannflächen in Spannstellung des Membranspannfutters konzentrisch zu der ersten Referenzfläche angeordnet sein.

Wird ein Membranspannfutter gemäß der Erfindung ausgebildet, so sind nicht nur die Vorteile des bekannten Membranspannfutters gegeben, nämlich mit Hilfe der Schnellspanneinrichtungen einen Wechsel der Spannbacken in kurzer Zeit und auf äußerst einfache Weise vorzunehmen, ohne dass es dazu besonderer Werkzeuge bedarf, sondern es ist vor allem möglich, Spannbacken zu ersetzen, ohne dass dies einen besonderen Aufwand bedarf oder dass diese nachgeschliffen werden müssen. Dadurch, dass an der Membran in deren Spannstellung zwei Referenzflächen geschaffen sind, an denen die Spannbacken bzw. die Spannköpfe in radialer und in axialer Richtung fixiert und somit die exakte Lage in Spannstellung vorgegeben ist - da die Ansatzstücke mit radialem Spiel in der Membran und den Gegengewichten angeordnet sind, ist dies möglich - können die Spannbacken oder Einsatzbacken ohne weiteres ausgetauscht werden. Je nach Arbeitsvorgang können demnach gesondert gefertigte Spannbacken verwendet werden.

Die Lagerhaltung an Spannbacken wird aufgrund der vorgesehenen Ausgestaltung in einem erheblichem Maße verringert, auch werden die Rüstzeiten erheblich verkürzt. Spannbacken können demnach problemlos nachgeliefert werden, ohne dass in diesem Fall ein Einschleifen auf dem Spannfutter erforderlich ist. Dennoch ist stets die gleiche Spannstellung eines vorschlagsgemäß ausgebildeten Spannfutters gegeben. Die Spannflächen und den Spannbacken bzw. Einsatzbacken zugeordnete Anlageflächen verlaufen nämlich in Spannstellung des Membranspannfutters konzentrisch zueinander. Da gegenüber dem bekannten Membranspannfutter die in besonderer Weise ausgebildeten Backenträger entfallen, ist mit geringerem Aufwand stets eine hohe Spanngenauigkeit zu erzielen und der Einsatzbereich eines derartigen Membranspannfutters ist bei hoher Wiederholgenauigkeit wesentlich gesteigert.

In der Zeichnung ist ein Ausführungsbeispiel eines gemäß der Erfindung ausgebildeten Membranspannfutters dargestellt, das nachfolgenden im Einzelnen erläutert ist. Hierbei zeigt:
- Figur 1: ein mit Gegengewichten versehenes Membranspannfutter mit eingespanntem Werkstück, in einem Axialschnitt,

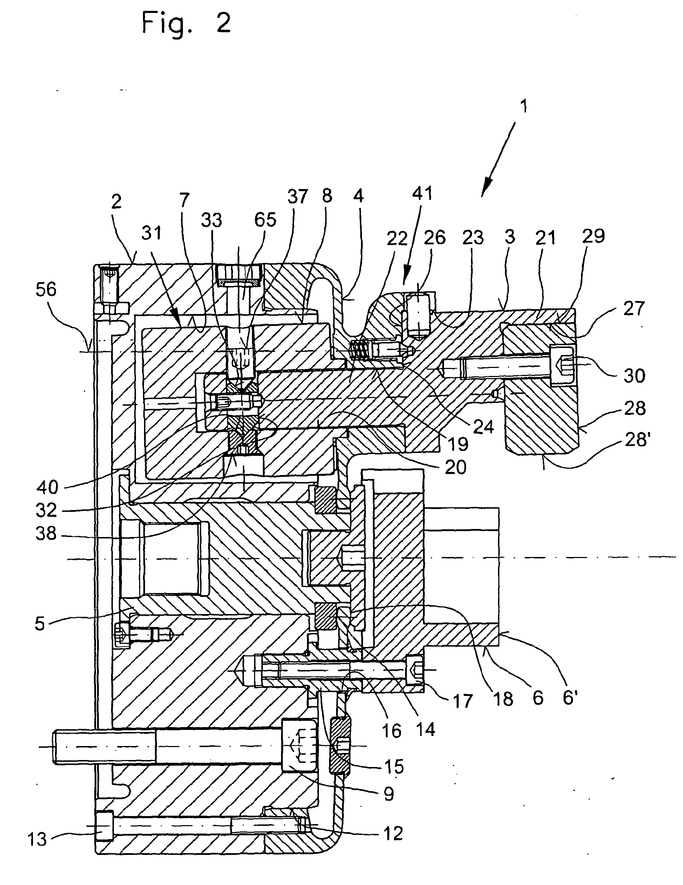

- Figur 2: das Membranspannfutter nach Figur 1 mit geöffneten Spannbacken,
- Figur 3: das Membranspannfutter nach Figur 1 ohne und mit eingesetzten Spannbacken in Vorderansicht und,
- Figur 4: einen Spannbacken mit Gegengewicht sowie den zugeordneten Bauteilen des Membranspannfutters nach Figur 1, in einer vergrößerten Darstellung.

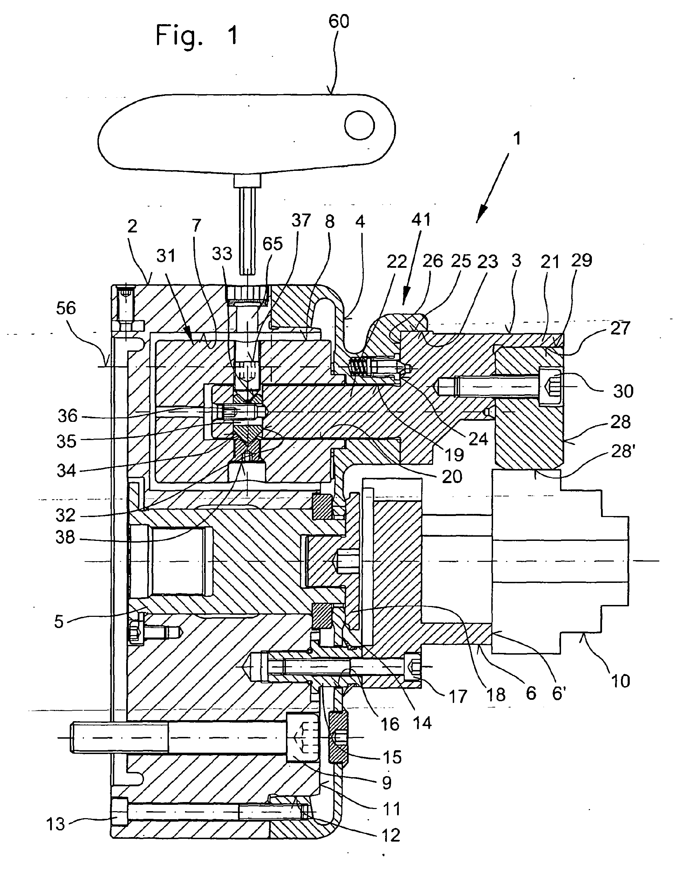

Das in Figur 1 dargestellte und mit 1 bezeichnete Membranspannfutter dient zum Einspannen insbesondere von hochwertigen Werkstücken 10, wie z.B. Zahnrädern, und besteht im wesentlichen aus in einem Futterkörper 2 eingesetzte auf das Werkstück 10 einwirkende Spannbacken 3, die mit einer an der Stirnfläche 11 in einer Ausnehmung 12 des Futterkörpers 2 in dessen äußeren Bereich mittels Schrauben 13 befestigten verformbaren Membran 4 aus einem metallischen Werkstoff trieblich verbunden sind.

Zur Betätigung der Membran 4 ist ein zentrisch angeordnetes Betätigungsglied 5 vorgesehen, in das auf der den Spannbacken 3 abgewandten Ende eine durch eine nicht gezeigte Servoeinrichtung verstellbare Zugstange einschraubbar ist. Am anderen Ende des Betätigungsgliedes 5 ist mittels einer Scheibe 18 die mit einem ballig ausgebildeten Bund 14 versehene Membran 4 eingespannt.

Des Weiteren sind in in den Futterkörper 2 eingearbeitete Ausnehmungen 7 den Spannbacken 3 zugeordnete Gegengewichte 8, durch die den von den Spannbacken 3 bei Rotation des Membranspannfutters 1 erzeugten Fliehkräften entgegenwirkt wird, eingesetzt, mit denen die Spannbacken 3 mittels an deren Spannköpfen 21 angeformter abgesetzter Ansatzstücke 22 mit Hilfe von Schnellspanneinrichtungen 31 lösbar, aber dennoch fest verbindbar sind. Die z.B. als zylindrische Schäfte ausgebildeten Ansatzstücke 22 durchgreifen dazu in der Membran 4 vorgesehene Ausnehmungen 19 und ragen in in die Gegengewichte 8 eingearbeitete Bohrungen 20 hinein, in denen sie mittels der Schnellspanneinrichtungen 31 arretierbar sind.

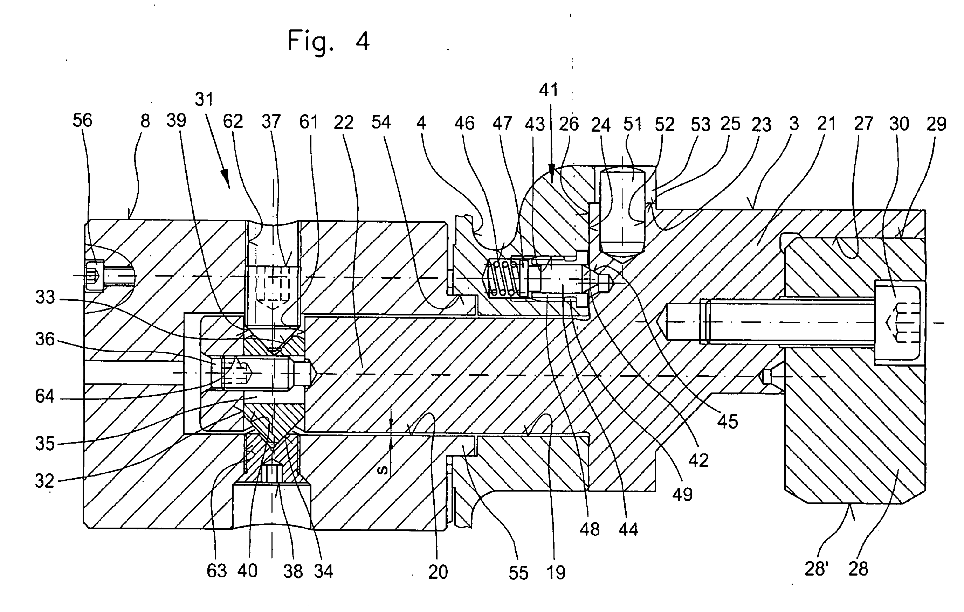

Die Schnellspanneinrichtungen 31 sind jeweils, wie dies insbesondere der Fig. 4 zu entnehmen ist, durch einen radial begrenzt verschiebbaren Pendelbolzen 32 und zwei Halteschrauben 37 und 38 gebildet, die zur Erzeugung einer in Achsrichtung der Ansatzstücke 22 wirkenden Kraft in Einbaulage achsversetzt zueinander angeordnet sind. Die Pendelbolzen 32 sind dazu in in die Ansatzstücke 22 eingearbeiteten Bohrungen 61 eingesetzt, die Halteschrauben 37 bzw. 38 dagegen in in die Gegengewichte 8 eingearbeitete Gewindebohrungen 62 bzw. 63 eingeschraubt. Außerdem sind die Pendelbolzen 32 jeweils mit einem Innenkonus 33 und einem Außenkonus 34 ausgestattet, die mit einem an den Halteschrauben 37 bzw. 38 angearbeiteten Außenkonus 39 bzw. einem Innenkonus 40 zusammenwirken. Zur Halterung der Pendelbolzen 32 in den Ansatzstücken 23 sind in diese Gewindebohrungen 64 eingearbeitet, und die Pendelbolzen 32 sind mit Langlöchern 35 versehen, in die in die Gewindebohrungen 64 eingeschraubte Stifte 36 eingreifen.

Die Schnellspanneinrichtungen 31 wirken in der Weise, dass durch Einschrauben der über in dem Futterkörper 2 vorgesehenen mit den Gewindebohrungen 62 fluchtende Bohrungen 65 zugänglichen Halteschrauben 37, z.B. mittels eines Innensechskantschlüssels 60, in den Innenkonus 33 der Pendelbolzen 32 diese mit ihrem Außenkonus 34 an dem Innenkonus 40 der Halteschrauben 38 abgestützt werden, so dass durch die Schrägflächen eine Kraft in Achsrichtung der Ansatzstücke 22 erzeugt wird und die Spannbacken 3 bzw. deren Spannköpfe 21 gegen die Membran 4 gepreßt werden. Vorraussetzung ist allerdings, dass die Pendelbolzen 32 gegenüber den Halteschrauben 37 und 38 geringfügig achsversetzt sind.

Um die Spannbacken 3 lagegenau an der Membran 4 abstützen zu können, ist diese mit einer ersten Referenzfläche 23 und zweiten Referenzfläche 24 ausgestattet, die achssenkrecht zueinander ausgerichtet sind und wobei die erste Referenzfläche 23 in Spannstellung des Membranspannfutters 1 achsparallel zu dessen Längsachse verläuft. Außerdem sind die als Schäfte ausgebildeten Ansatzstücke 22 der Spannköpfe 21 mit einem geringen Spiel s in den in der Membran 4 eingearbeiteten Bohrungen 19 und den in den Gegengewichten 8 vorgesehenen Bohrungen 20 angeordnet, so dass eine Ausrichtung auf die erste Referenzfläche 23 ohne weitere möglich ist.

Eine selbsttätige Anlage der Spannköpfe 21 an der ersten Referenzfläche 23 mit einer Anlagefläche 25 wird mittels Federrasten 41 bewerkstelligt, durch die die Spannköpfe 21 nach außen gedrückt und mittels der Schnellspanneinrichtungen 31 an dieser fixiert werden. Gleichzeitig erfolgt die Anlage mit der Anlagefläche 26 an der Referenzfläche 24 der Membran 4.

Die Federrasten 41 bestehen hierbei, wie dies ebenfalls dem in Figur 4 vergrößert wiedergegebenen Ausschnitt zu entnehmen ist, aus einem in eine in die Membran 4 eingearbeiteten Bohrung 43 eingesetzten Stift 44, auf den eine Druckfeder 46 einwirkt und der mit einer kegeligen Spitze 45 in eine in die der zweiten Referenzfläche 24 gegenüberliegenden Anlagefläche 26 des Spannkopfes 21 eingearbeitete kegelige Bohrung 42 eingreift. Der Stift 44 ist mit einem Bund 47 versehen und verschiebbar in einer Hülse 48 eingesetzt, die in die mit einem Innengewinde 49 ausgestattete Bohrung 43 eingeschraubt ist. Durch die Kraft der Druckfeder 46 wird somit der Spannkopf 21 beim Einsetzen der Spannbacken 3 gegen die erste Referenzfläche 23 nach außen gepresst und in dieser Lage bis zum Verspannen der Spannbacken 3 mit der Membran 4 mittels der Schnellspannrichtungen 31 fixiert.

Um die Gegengewichte 8 formschlüssig mit der Membran 4 zu verbinden, damit diese deren Verstellbewegungen folgen, sind die Gegengewichte 8 mittels Schrauben 56 fest mit der Membran 4 verschraubt. Außerdem sind in die Membran 4 den Gegengewichten 8 zugeordnete Ausnehmungen 54 eingearbeitet und die Gegengewichte 8 sind jeweils mit einem Ansatz 55 versehen, die in die Ausnehmungen 54 eingreifen und in diesen zentriert sind. Die Spannbacken 3 bilden auf diese Weise im verspannten Zustand mit den Gegengewichten 8 eine Einheit.

Um die Spannbacken 3 in Umfangsrichtung leicht ausrichten zu können, sind an diesen radial nach außen abstehende Stifte 51 angebracht, die in Bohrungen 52 eingesetzt sind. Des Weiteren ist die Membran 4 mit in Achsrichtung offenen Schlitzen 53 versehen, in die Stifte 51 bei der Montage der Spannbacken 3 eingeführt werden. Die Lage der Stifte 51 ist jeweils auf die Federrasten 41 ausgerichtet, so dass deren Stifte 44 ohne weiteres in die Bohrungen 42 eingreifen können.

Bei dem gezeigten Ausführungsbeispiel wirken die Spannköpfe 21 der Spannbacken 3 nicht unmittelbar auf das Werkstück 10 ein, an den Spannköpfen 21 sind vielmehr mit einer Spannfläche 28' versehene Einsatzbacken 28 angebracht, die an den Anlageflächen 27 der Spannköpfe 21 mit ihrer Anlagefläche 29 anliegen und mittels Schrauben 30 an diese befestigt sind. Die Einsatzbacken 28 sind demnach leicht auswechselbar. Selbstverständlich ist es auch möglich, die Spannköpfe 21 als einstückige Spannbacken auszubilden.

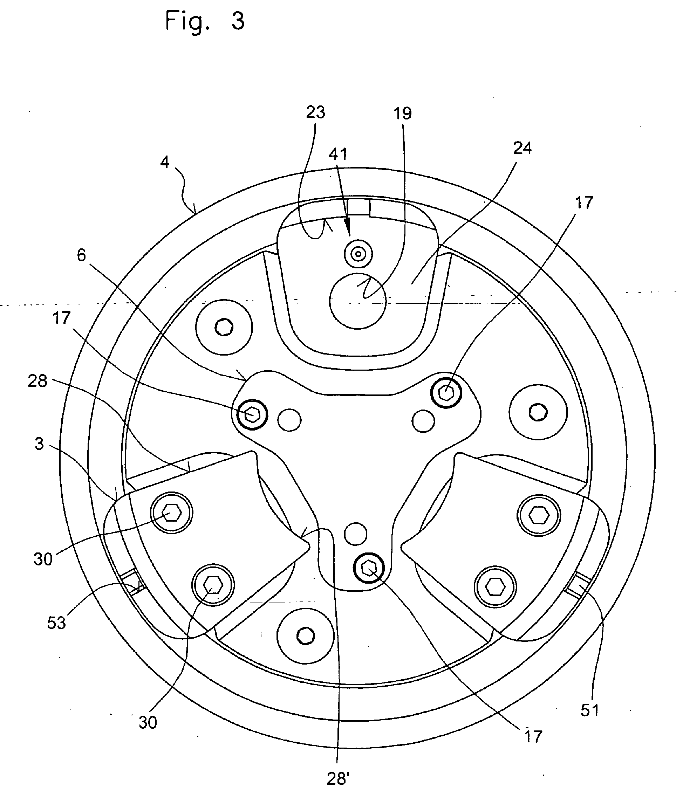

Zur Abstützung des Werkstückes 10 ist an dem Futterkörper 2 des Weiteren ein dreiarmiger Anschlagring 6 angebracht, der, wie dies Fig. 3 zu entnehmen ist, zwischen die Spannbacken 3 hineinragt und Anlageflächen 6' aufweist. Zur Halterung des Anschlagringes 6 sind in den Futterkörper 2 eingesetzte Hülsen 15, die entsprechende in die Membran 4 eingearbeitete Ausnehmungen 16 durchgreifen, vorgesehen. Mittels Schrauben 17 ist der Anschlagring 6 an den Hülsen 15 befestigt. Die Stirnfläche des Anschlagringes 6 ist als Anlagefläche 6' für das Werkstück 10 ausgebildet. Durch weitere Schrauben 9, die über in die Membran 4 eingearbeiteten und durch Stopfen verschlossene Bohrungen zugänglich sind, ist der Futterkörper 2 des Membranspannfutters 1 an einer Werkzeugmaschine zu befestigen.

Bei dem Membranspannfutter 1 sind demnach lediglich die Referenzflächen 23 und 24 maßgenau zu bearbeiten. Die Spannbacken 3 und die Einsatzbacken 21 können dagegen gesondert gefertigt und wahlweise beigestellt werden. Da die Anlageflächen 25 und 27 der Spannköpfe 21 und die Anlagefläche 29 der Einsatzbacken 28 und deren Spannfläche 28' in Spannstellung des Membranspannfutters 1 stets konzentrisch zueinander verlaufen, ist es möglich, die einzelnen Durchmesser der Anlageflächen aufeinander abzustimmen und entsprechend dem jeweiligen Arbeitsvorgang zu wählen, ohne dass die Referenzfläche 23 beeinflusst wird und ein Einschleifen erforderlich ist.

Bei der Einspannung unterschiedlicher Werkstücke ist dennoch stets eine hohe Einspanngenauigkeit gegeben.

## Patentansprüche

1. Membranspannfutter (1) mit in einem Futterkörper (2) eingesetzten auf ein einzuspannendes Werkstück (10) einwirkenden Spannbacken (3), die mit einer an der Stirnfläche (11) des Futterkörpers (2) in dessen äußeren Bereich befestigten und durch ein zentrisch angeordnetes axial verschiebbares Betätigungsglied (5) verformbaren Membran (4) trieblich verbunden sind, wobei in Ausnehmungen (7) des Futterkörpers (2) den Spannbacken (3) zugeordnete Gegengewichte (8) eingesetzt und die als Spannköpfe (21) gestalteten Spannbacken (3) jeweils mit einem abgesetzten in Richtung des Futterkörpers (2) axial gerichteten und etwa achsparallel zu diesem verlaufenden Ansatzstück (22) versehen sind, die in in den Gegengewichten (8) eingearbeiteten Freisparungen (20) gehalten und die Spannbacken (3) mittels in die Ansatzstücke (22) eingreifender und in deren Achsrichtung wirkender Schnellspanneinrichtungen (31) mit der Membran (3) sowie den Gegengewichten (8) verspannbar sind,
**dadurch gekennzeichnet,**
**dass** die Ansatzstücke (22) der Spannbacken (3) bzw. der Spannköpfe (21) mit radialem Spiel in der Membran (4) und den Gegengewichten angeordnet sind und dass die Spannbacken (3) bzw. die Spannköpfe (21) unmittelbar an einer ersten in Spannstellung achsparallel zu dem Futterkörper (2) verlaufenden Referenzfläche (23) und einer zweiten achssenkrecht zu dieser an der Membran (4) angearbeiteten Referenzfläche (24) abgestützt sind.

2. Membranspannfutter nach Anspruch 1,
**dadurch gekennzeichnet,**
**dass** die Spannbacken (3) bzw. die Spannköpfe (21) mittels einer oder mehrerer axial gerichteter in der Membran (4) und/oder den Spannbacken (3) bzw. der Spannköpfen (21) eingesetzte Federrasten (41) an der ersten Referenzfläche (23) der Membran (4) anlegbar und mittels der Schnellspanneinrichtung (31) an dieser fixierbar sind.

3. Membranspannfutter nach Anspruch 2,
**dadurch gekennzeichnet,**
**dass** die Federrasten (41) jeweils aus einem achsparallel zu der ersten Referenzfläche (23) der Membran (4) angeordneten in einer Bohrung (43) der Membran (4) oder der Spannbacken (3) bzw. der Spannköpfe (21) eingesetzten Raststift (44), der entgegen der Kraft einer Feder (46) axial verschiebbar ist, und einer diesem zugeordneten in die der zweiten Referenzfläche (24) der Membran (4) gegenüberliegenden Gegenfläche (25) oder in die zweite Referenzfläche (24) eingearbeitete Ausnehmung (42) mit einer kegelig ausgebildeten Spitze (45) eingreift.

4. Membranspannfutter nach einem oder mehreren der Ansprüche 1 bis 3,
**dadurch gekennzeichnet,**
**dass** die Gegengewichte (8) mit den Spannbacken (3) bzw. den Spannköpfen (21) fest verbunden, vorzugsweise verschraubt sind.

5. Membranspannfutter nach einem oder mehreren der Ansprüche 1 bis 4,
**dadurch gekennzeichnet,**
**dass** die Gegengewichte (8) jeweils mittels eines zentrisch zu den Ansatzstücken (22) der Spannbacken (3) angeformten Bundes (55) in zugeordnete in die Membran (4) eingearbeitete Ausnehmungen (54) zentriert sind.

6. Membranspannfutter nach einem oder mehreren der Ansprüche 1 bis 5,
**dadurch gekennzeichnet,**
**dass** die Spannbacken (3) bwz. der Spannköpfe (21) jeweils mittels eines in diese eingesetzten nach außen abstehenden und in einen axial gerichteten in die Membran (4)eingearbeiteten Schlitz (53) eingreifenden Stiftes (51) in Umfangsrichtung positioniert sind.

7. Membranspannfutter nach einem oder mehreren der Ansprüche 1 bis 5,
**dadurch gekennzeichnet,**
**dass** die Spannbacken (3) bzw. die Spannköpfe (21) mit auswechselbar an diesen befestigten Einsatzbacken (28) versehen sind.

8. Membranspannfutter nach einem oder mehreren der Ansprüche 1 bis 7,
**dadurch gekennzeichnet,**
**dass** die Spannflächen der Spannbacken (3) bzw. an den Spannköpfen (21) vorgesehene Anlageflächen (27) für Einsatzspannbacken (28) und deren Spannflächen (28') in Spannstellung des Membranspannfutters (1) konzentrisch zu der ersten Referenzfläche (23) angeordnet sind.

## Claims

1. A diaphragm chuck (1) with clamping jaws (3) inserted in a chuck body (2) that act on a workpiece (10) to be clamped and that are in a driven connection with a diaphragm (4) that is located on the front face (11) of the chuck body (2), attached to the outer area of the chuck body (2) and can be deformed by means of a centrally arranged, axially adjustable actuator (5), with counterweights (8) assigned to clamping jaws (3) located in recesses (7) in the chuck body (2) and each of the clamping jaws (3) designed as clamping heads (21) being equipped with an offset contact piece (22) that is axially arranged in the direction of the chuck body (2) and runs approximately axially in parallel to the chuck body (2), these contact pieces (22) being held in recesses (7) worked into the counterweights (8) and the clamping jaws (3) being clamped against the diaphragm (3) and the counterweights (8) by means of quick-clamping devices (31) that engage in the contact pieces (22) and act in the axial direction of the contact pieces (22),
**characterised in that**,
the contact pieces (22) of the clamping jaws (3) or clamping heads (21) are arranged in the diaphragm (4) and the counterweights with radial play and that the clamping jaws (3) or clamping heads (21) are directly supported against a first reference surface (23) running axially in parallel to the chuck body (2) in the clamping position and against a second reference surface (24) that is worked onto the diaphragm (4) at right angles to the first reference surface (23).

2. The diaphragm chuck in accordance with Claim 1,
**characterised in that**,
the clamping jaws (3) or the clamping heads (21) can be placed in contact with the first reference surface (23) of the diaphragm (4) by means of one or more axially arranged spring detents (31) inserted in the diaphragm (4) and/or the clamping jaws (3) or clamping heads (21), and for the clamping jaws (3) or clamping heads (21) to be fixed onto the diaphragm (4) by means of the quick clamping device (31).

3. The diaphragm chuck in accordance with Claim 2,
**characterised in that**,
each of the spring detents (41) is composed of a detent pin (44) arranged axially in parallel to the first reference surface (23) of the diaphragm (4) and inserted in a hole (43) in the diaphragm (4) or the clamping jaws (3) or clamping heads (21) that can be moved axially against the force of a spring (46), and of a recess (42) with a conical tip (45) assigned to the detent pin (44), the recess (42) being worked into the counter surface (25) opposite to the second reference surface (24) of the diaphragm (4) or into the second reference surface (24).

4. The diaphragm chuck in accordance with one or more of Claims 1 to 3,
**characterised in that**,
the counterweights (8) are fixedly connected to the clamping jaws (3) or clamping heads (21), this connection preferably taking the form of a screwed connection.

5. The diaphragm chuck in accordance with one or more of Claims 1 to 4,
**characterised in that**,
each of the counterweights (8) is centred in associated recesses (54) worked into the diaphragm (4) by means of a collar (55) formed centrally in relation to the contact pieces (22) of the clamping jaws (3).

6. The diaphragm chuck in accordance with one or more of Claims 1 to 5,
**characterised in that**,
each of the clamping jaws (6) or clamping heads (21) is positioned in the circumferential direction by means of an outwardly projecting pin (51) that engages in an axially aligned slot (53) worked into the diaphragm (4).

7. The diaphragm chuck in accordance with one or more of Claims 1 to 5,
**characterised in that**,
the clamping jaws (3) or clamping heads (21) are equipped with exchangeable reducing jaws (28) that are attached to the clamping jaws (3) or clamping heads (21).

8. The diaphragm chuck in accordance with one or more of Claims 1 to 7,
**characterised in that**,
the clamping surfaces of the clamping jaws (3) or the contact surfaces (27) provided on the clamping heads (21) for reducing jaws (28) and their clamping surfaces (28') should be arranged concentrically with the first reference surface (23) when the diaphragm chuck (1) is in its clamped position.

## Revendications

1. Mandrin à diaphragme (1) comprenant des mors de serrage (3) montés dans un corps du mandrin (2) et agissant sur une pièce à usiner (10) qui y est serrée, liés par entraînement avec un diaphragme (4) qui est fixé à l'endroit extérieur de la face frontale (11) du corps du mandrin (2) et qui se laisse déformer par un élément d'actionnement (5) centré et axialement déplaçable, où des creux (7) du corps du mandrin (2) portent des contrepoids (8) assignés aux mors de serrage (3) et où les mors de serrage (3) conçus en tant que têtes de serrage (21) sont équipés respectivement d'un embout (22) décalé, orienté axialement en direction du corps du mandrin (2), s'étendant parallèlement à l'axe de celui-ci, et retenu dans des creux (20) pratiqués dans les contrepoids (8) et où les mors de serrage (3) se laissent serrer au diaphragme (3) ainsi qu'aux contrepoids (8) moyennant des équipements de serrage instantané (31) en prise dans les embouts (22) et agissant en leur direction axiale,
**caractérisé en ce que**
les embouts (22) des mors de serrage (3) ou des têtes de serrage (21) sont disposés avec un jeu radial dans le diaphragme (4) et dans les contrepoids (8) et que les mors de serrage (3) ou les têtes de serrage (21) s'appuient directement sur un premier plan de référence (23) orienté parallèlement, au serrage, à l'axe du corps du mandrin (2) et sur un deuxième plan de référence (24) perpendiculaire à l'axe du plan de référence (23) et pratiqué dans le diaphragme (4).

2. Mandrin à diaphragme d'après la revendication 1,
**caractérisé en ce que**
moyennant un ou plusieurs crans à ressort (41) orientés axialement et prévus dans le diaphragme (4) et/ou dans les mors de serrage (3) ou les têtes de serrage (21), les mors de serrage (3) ou les têtes de serrage (21) se laissent appuyer contre le premier plan de référence (23) du diaphragme (4) puis fixer sur celui-ci moyennant l'équipement de serrage instantané (31).

3. Mandrin à diaphragme d'après la revendication 2,
**caractérisé en ce que**
les crans à ressort (41) consistent respectivement d'un goujon de crantage (44) disposé parallèlement à l'axe du premier plan de référence (23) du diaphragme (4) et inséré dans un alésage (43) du diaphragme (4) ou des mors de serrage (3) ou des têtes de serrage (21), qui se laisse déplacer axialement contre la force d'une ressort (46) et dont la pointe conique (45) s'engrène dans un creux (42) correspondant prévu dans le contre-plan (25) opposé au deuxième plan de référence (24) du diaphragme (4), ou dans le deuxième plan de référence (24).

4. Mandrin à diaphragme d'après une ou plusieurs des revendications 1 à 3,
**caractérisé en ce que**
les contrepoids (9) sont rigidement liés, de préférence vissés aux mors de serrage (3) ou aux têtes de serrage (21).

5. Mandrin à diaphragme d'après une ou plusieurs des revendications 1 à 4,
**caractérisé en ce que**
moyennant un collet (55) formé et centré par rapport aux embouts (22) des mors de serrage (3), les contrepoids (8) se laissent centrer dans les creux (54) correspondants, prévus dans le diaphragme (4).

6. Mandrin à diaphragme d'après une ou plusieurs des revendications 1 à 5,
**caractérisé en ce que**
les mors de serrage (3) ou les têtes de serrage (21) sont positionnés en direction du pourtour moyennant respectivement un goujon (51) inséré dans ceux-ci, saillant vers l'extérieur et s'engrenant dans une fente (53) orientée axialement et pratiquée dans le diaphragme (4).

7. Mandrin à diaphragme d'après une ou plusieurs des revendications 1 à 5,
**caractérisé en ce que**
les mors de serrage (3) ou les têtes de serrage (21) sont équipés de mors rapportés (28) qui y sont fixés de manière échangeable.

8. Mandrin à diaphragme d'après une ou plusieurs des revendications 1 à 7,
**caractérisé en ce que**,
en position serrée du mandrin à diaphragme (1), les plans de serrage des mors de serrage (3) ou les plans de portée (27) prévus sur les têtes de serrage (21) pour les mors rapportés (28), et leurs plans de serrage (28'), sont disposés de manière concentrique par rapport au premier plan de référence (23).
